# EUROPEAN PATENT SPECIFICATION

(11) **EP 0 665 060 B1**
(45) Date of publication and mention of the grant of the patent: **28.04.1999**
(21) Application number: 95850020.9
(22) Date of filing: 23.01.1995
(51) Int. Cl.: B02C 17/16

(54) **An arrangement for milling mineral products**
Vorrichtung zur Zerkleinerung von Mineralprodukten
Appareil pour broyer des produits minéraux

(30) Priority: 26.01.1994 SE 9400224
(43) Date of publication of application: 02.08.1995
(73) Proprietor: Svedala Ltd, Derby DE21 4SZ (GB)
(72) Inventor: Bogen, Jan Odd, S-640 45 Kvicksund (SE)
(74) Representative: Lundin, Björn-Eric

(56) References cited:
- EP-A- 0 451 121
- US-A- 4 244 531
- Derwent's abstract, no. 84-16012/03, week 8403; & SU-A-1003891, (ZAITSEV V A), 15-03-1983

## Description

The present invention relates to an arrangement for milling mineral products and similar hard materials with the aid of a rotor-agitated milling or grinding medium, wherein agitating rods extend straight out from rotor surfaces.

The technique of milling materials with the aid of an agitated or stirred medium (Stirred Ball Milling) has been known for almost sixty years. The industrial breakthrough with this technique was made in 1948 in conjunction with pigment milling processes in the paint and varnish industry. The technique has been developed successively in recent years and has obtained wider applications. This has resulted in many different types of grinding mills which use an agitated grinding medium. This development is reported, for instance, in an article published in the International Journal of Mineral Processing, 22 (1988), pages 431-444. One of the mills described is fitted with rotary pin-agitators by means of which the requisite grinding energy is generated by forced displacement of the grinding medium.

Because the mills are able to grind material quickly down to very fine grain sizes, normally within the range of 1-10 µm, milling with agitated medium has been applied to increasing extents in grinding down different types of material. Such fine milling processes are thus used to produce fine-grain products in such diverse fields as paints and varnishes, pharmacology, electronics, agrochemistry, foodstuffs, biotechnology, rubber and coal and energy. Coal-oil mixtures and coal-water suspensions can be mentioned as examples in this latter respect. Grinding or milling with the aid of agitated grinding media is now being applied within the field of mineral technology. Examples in this regard include the grinding of limestone, kaolin, gypsum, aluminium hydroxide and in the manufacture of fillers and coating (sizing) materials for use in the manufacture of paper. The majority of applications enumerated above with regard to the mineral field are only concerned with materials which are "soft" in the present context and thus relatively easy to grind. One such mill is described in US-A-4,244,531 with particular reference to the production of aluminium powder and powdered cocoa, among other things. Another similar mill is described in SU-A-1003891 for wet milling ferrite powders and has rods which inner half part is conical in order to improve efficiency of mixing in the mill.

Recently, mention has been made of the use of this technique in South Africa for recovering the precious or valuable metal content of pyrite and calcined pyrite (roasted pyrite), wherein it was found that leaching of extremely minute quantities of gold and other precious metals from these products increased substantially with the fineness of the particles processed. It was also found, however, that a grinding or milling time of 6-8 hours was required in order to achieve maximum recovery. EPA-A-0,267,170 describes the regrinding of a recycled products in the enrichment of mineral products, in which the recycled product is re-ground with the intention of freeing individual half-grains (i.e. in principle particles which contain both ore and gangue mineral) and releasing precious or valuable minerals. The recycled product is re-ground in a mill equipped with agitated or stirred grinding medium to a particle size beneath K₈₀ = 100 µm. According to this publication, re-grinding is effected with a limited energy input.

It has long been known that the extent to which products are ground will depend mainly on the specific energy input, expressed suitably as kWh/t of ground product, and only to a lesser extent by the type of mill used. However, it has been found in recent times that agitated mills are more effective with regard to products that are to be ground to sizes finer than 75µm, and that the finer the desired end product the more attractive the agitated mill has become.

Thus, a finer end product requires a higher specific energy input, i.e. a higher specific power input and/or a longer milling time. Naturally, endeavours are first made to achieve the desired result with a higher power input, so as not to effect mill productivity in a negative sense. Naturally, milling times of 6-8 hours, mentioned in respect of pyrite milling in South Africa for instance, are not so attractive, although they are necessary in many cases because a higher power input would place greater demands on the ability of the mill to withstand a hard wearing environment, particularly when grinding such hard materials as ores. It has been found that primarily the pin rotor of the mills is worn down more quickly with increasing power inputs. In this regard, both the pins and the actual rotor surface are subjected heavily to wear. The rotor pins are normally comprised of different alloyed steels, although steel pins having an outer protective hard metal or cemented carbide coating have also been tested, in an attempt to increase the wear resistance of the pins.

Hitherto, endeavours to increase the effect of pin rotors in grinding mills have failed because the pins wear down much too rapidly or because the pins loosen from the rotor, therewith constituting a serious obstacle to the use of this technique in practice for ore enrichment purposes.

There is thus a pronounced need of being able to increase the power input when milling or grinding harder materials with the object of producing finer milled products when milling with the aid of a grinding medium which is agitated by a pin rotor.

Such an arrangement is described in our earlier EP-A-451121, which is herewith incorporated in this document as a reference, wherein the-rotor pins are of cemented carbide, which imparts to the pins a much longer useful life than the pins of earlier known mills which employ agitated grinding techniques. One drawback with those pins, however, is the very high price commanded by the pins and consequently it is necessary to protect such pin mills against the results of mechanical shock loads to the best possible extent. Shock loads present a serious risk of the pins fracturing, so as to render the pins unserviceable and therewith require them to be replaced with new pins. Shock loads can occur, for instance, when large pieces of material accompany the grinding medium charged to the mill for grinding purposes. This grinding medium normally has the form of molded or cast balls, cylpebs or like bodies, and may sometimes include agglomerations of such bodies which are held together by burrs or like appendages.

The object of the present invention is to provide an arrangement for milling with an agitated or stirred medium at a high power input, wherein both rotor and pins, or rods, will have an improved resistance to occurrent degradation forces when milling with an agitated grinding medium and with a high power input. The term "rods" will be used in the following with reference to the present invention.

The invention is characterized to this end by the features set forth in the following Claims.

It has been found that mills which operate with grinding media that are agitated by rod-equipped rotors, hereinafter referred to as rod rotors, exhibit improved properties with regard to resistance against mechanical shock loads and against wear on the rotor surface when the rotor is provided with rods of which at least the outer part which protrudes outside the rotor has a generally circular cross-section which decreases continuously from the rotor surface or from a point immediately outside said surface to its outer extremity down to its outer extremity, so as to impart the outer part of the rods a conical form.

At least the major part of respective rods will preferably be comprised of cemented carbide though the invention is not limited hereto, therewith imparting to the rods an improved wear resistance, as described with reference to our earlier invention, and also an improved resistance to shock loads by virtue of the special configuration of the rods themselves, in accordance with the main Claim.

The rods are preferably anchored in the rotor with the aid of devices located within said rotor, which may conveniently have the form of a hollow cylinder of appropriate wall thickness. The rods are preferably anchored in the rotor so as to be seated diametrically in different locations and to extend in different directions therearound.

The rods are conveniently provided with screw means on that end of the rods which are proximal to the rotor, i.e. on the ends that are to be anchored in said rotor. When the rods are made of cemented carbide, they will conveniently be provided with an insert made of a material which is suitable for anchoring purposes and which is combined with the rod in some suitable manner and provided with the rod-anchoring screw means.

Conical rotor rods constructed in accordance with the inventive concept will have a much better shock resistance than the earlier used pins of uniform thickness, i.e. those parts of the rods which lie close to the rotor will not be fractured as frequently as said earlier known pins when coming into contact with heavy bodies entering the mill. As indicated in the introduction, the actual surface of a rotor which is provided with conical rods in accordance with the invention will be worn down much more slowly than a rotor which is provided with conventional straight pins or rods, which is highly surprising. It is not clear why this is so, although it is probably because the conicity of the rods results in a "reaction force" which has a radially outward component. Tests carried out in the development of the novel rods have shown that substantial powers are obtained in this regard at conicities as small as 3-5°, i.e. the angle between the centre axis of the rod and its outer peripheral surface. It is calculated on the basis of the results of these tests that the active life of the rotor is five times longer than the active lifetime of a rotor provided with straight pins or rods. The conical rods are also ten times more resistant to shock loads than the corresponding straight rods or pins. This result is achieved with a conicity as low as 3-5°, and a positive effect is obtained up to a conicity of about 10°. Grinding efficiency suffers at conicities above this latter value, and consequently the rods will preferably have a conicity of from 3-10°.

The rotor of mills of this type is normally always made of alloyed steel of the highest possible grade with regard to wear resistance. A suitable rotor will comprise a cast steel of high chromium content having a Rockwell index H_{RC} = 60 and a material thickness of about 40 mm.

Despite the high quality of this material, the wear to which the rotor is subjected at the high powers that occur will be so great as to seriously impair the useful life of the rotor unless the rotor is provided with conical rods in accordance with the invention.

The invention will now be described in more detail with reference to the accompanying drawings, in which Figure 1 illustrates part of a rotor which includes rods constructed in accordance with the invention, said rotor being seen from one side and partially in section; Figure 2 illustrates the lower part of a preferred rotor embodiment; Figure 3 is a horizontal sectional view of part of a rotor; and Figure 4 illustrates a preferred embodiment of a rod, partly in section and essentially in its natural size.

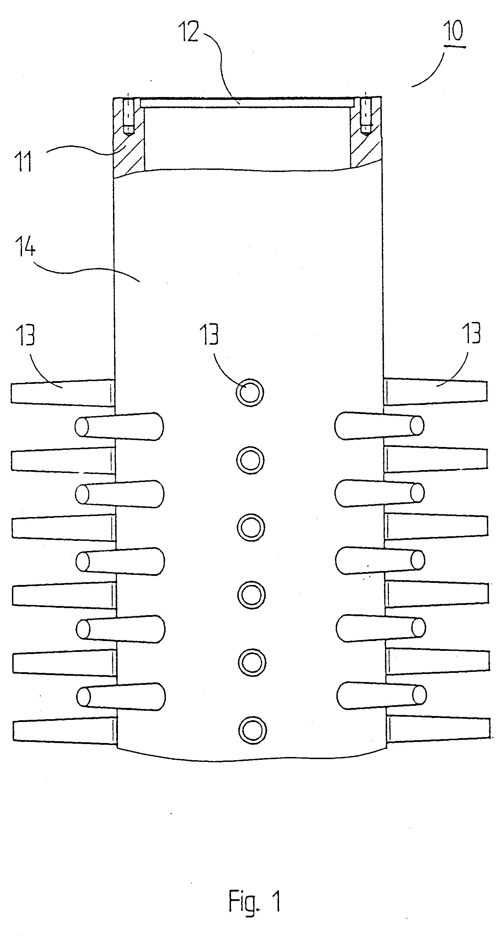

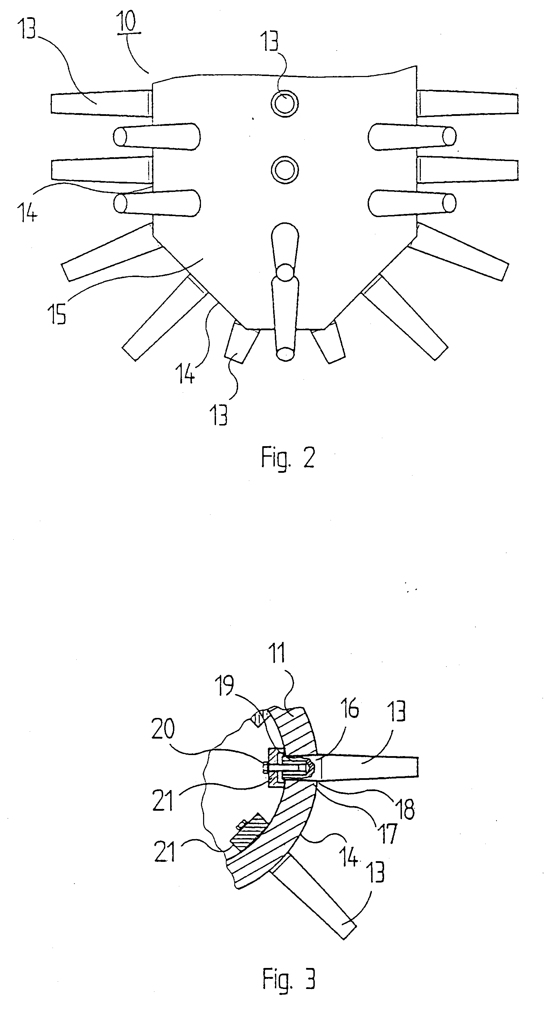

Figure 1 is a partially sectioned view of the upper part of a rotor 10. The illustrated part of the rotor 10 is fully circular in cross-section and is defined by a cylindrical rotor wall 11 and includes an upper part 12 having a round cover plate. Spaced from the upper part 12 of the rotor are conical rods 13 which are anchored in the rotor 10 so as to extend out essentially perpendicular to the cylindrical rotor surface 14, i.e. radially from the contemplated centre axis of the rotor 10. That part of the rods 13 which extend from the rotor surface 14, i.e. that part of the rods that can be seen in the Figure, have a circular cross-section. The number of rods and their geometric distribution on the rotor 10 is calculated with regard to the size of the rotor and with regard to the predetermined mill grinding power for grinding material with agitated grinding medium when intending to use the rotor. The lower part of the rotor 10, which is not shown in Figure 1, can be configured in several different ways, for instance it may include a horizontal bottom which can be provided with shorter rods or similar outstanding elements, or may be completely devoid of such elements. According to one alternative embodiment, the lower part of the rotor 10 may have a conical shape, as illustrated in Figure 2. According to the invention, the lower part of a rotor 10 in which rods 13 are anchored may have the shape of an inverted truncated cone, referenced 15. Rods 13 are anchored in the rotor wall in this conical part 15 in the same way as the rods are anchored in the cylindrical part of the rotor 10, the lower part of which is also shown in Figure 2, although the rods 13 extend essentially at right angles from the rotor surface 14 which, in this case, is not parallel with the contemplated rotor axis but defines an angle therewith.

Figure 3 is a horizontal sectional view which illustrates a method of anchoring rods 13 in the rotor wall 11 in accordance with one embodiment of the invention. In this case, the upper rod 13 is shown in section. As will be seen, the rod 13 of this embodiment has an inner conical part 16 which is anchored in the rotor wall 11 in a correspondingly conical hole 17 with the largest cross-section 18 of the rod 13 located immediately outside the rotor surface 14. The inner, conical part 16 of the rod 13 includes a rod-anchorage insert 19 which fits into a hollow in said part 16 of the rod 13 and which is connected permanently thereto, for instance hard-soldered thereto. The insert 19 includes a screw-threaded bore that can receive a bolt 20 which extends through a washer or some other clamping device 21, wherein the bolt functions to pull the rod 13 into the conical hole 17 as far as possible and therewith anchor the rod effectively to the rotor wall 11. The rods 13 can be anchored in other ways within the scope of the invention, for instance in the form of rod pairs, similar to the pin pairs described in our earlier publication EP-A-451121. An essential feature of the invention, however, is that the part of the rods 13 that projects from the rotor 10 has a circular cross-section which decreases continuously from the rotor surface 14 or from a point immediately outside said surface down to its outer extremity.

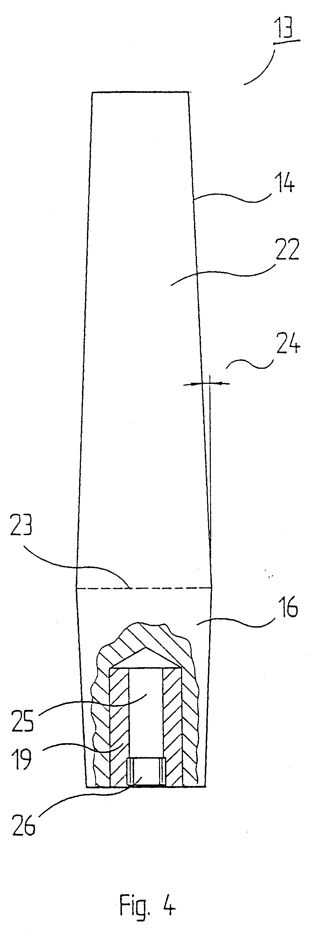

Figure 4 illustrates a preferred embodiment of a rod 13. The illustrated rod 13 includes an inner part 16, which is slightly conical in shape, and an outer part 22 which is more conical than the inner part 16, wherein the largest cross-sectional area of the rod 13 is found at the junction between its two conical parts 16, 22, this junction being marked in a broken, horizontal line 23. The outer part 22 has a conicity which is illustrated by an angle 24 defined between the horizontal line 23 and the peripheral surface 14 of the outer rod-part 22. The inner part 16 of the rod 13 includes a hollow or cavity 25 into which the insert 19 is fitted and firmly fixed, for instance by hard-soldering or crimping. The insert 19 includes or has connected thereto a separate screw means 26 which has both external and internal screw-threads and which is intended to receive a rod-anchoring bolt.

The present invention enables minerals to be ground to extremely fine grain sizes with a considerable saving in energy compared with conventional milling. Typical values in this regard are an energy consumption in Kwh/tonne which is only 0.50-0.66 of the energy consumed in conventional milling processes. Another important advantage is that the mills will have much smaller volumes, enabling the mills to be more easily placed and to be more flexible among other things, for instance can be placed closer to the units from which the material is taken, without needing to pump the material over long distances, a task which also requires a high energy input.

Furthermore, important advantages are gained over earlier known mills which grind material with the aid of an agitated grinding medium, as described in EP-A-451121, by providing the rotor with conical rods. These rods are much more resistant to heavy impacts and other mechanical shock loads, and the rotor surface is surprisingly less prone to wear as a result of contact with the grinding medium and the material being ground. This latter capacity of the rotor will also reduce the risk of the rods loosening from the rotor as a result of erosion of the rotor surface, among other things, while contributing towards further improvement in the effective operational time of the mills, or in other words contributing towards a reduction in mill idling time because of the reduction in need to carry out repairs.

## Claims

1. An arrangement for grinding mineral products and similar hard materials with the aid of a rotor-agitated grinding medium, wherein rods which function to agitate or stir the grinding medium extend straight out from the rotor surfaces, **characterized** in that at least the outer part of the rods which extend beyond the rotor surface have a generally circular cross-section which decreases continuously from the rotor surface or from a point immediately outside said rotor surface down to its outer extremity, so as to impart the outer part of the rods a conical form.

2. An arrangement according to Claim 1, **characterized** in that at least the major parts of respective rods are comprised of cemented carbide.

3. An arrangement according to Claims 1 and 2, **characterized** in that the rods are anchored in the rotor with the aid of means located inside the rotor.

4. An arrangement according to Claims 1-3, **characterized** in that the rods are anchored diametrically in different directions along the rotor.

5. An arrangement according to Claims 1-4, **characterized** in that the rods are anchored in the rotor by means of a screwthread provided on the inwardly facing end of said rods.

6. An arrangement according to Claims 2 and 5, **characterized** in that said rods are provided with a rod-anchoring insert which is made of an appropriate material and which fits into a cavity in one end of the rod and there fixedly connected thereto.

## Patentansprüche

1. Vorrichtung zum Zerkleinern von Mineralprodukten und ähnlichen harten Materialien mit Hilfe eines mit einem Rotor bewegten Mahlmediums, bei der Stäbe, die so arbeiten, daß sie das Mahlmedium bewegen oder rühren, sich von den Rotoroberflächen aus gerade erstrecken, **dadurch gekennzeichnet,** daß wenigtens der äußere Teil der Stäbe, der sich über die Rotoroberfläche hinaus erstreckt, einen allgemein runden Querschnitt hat, welcher kontinuierlich von der Rotoroberfläche oder von einem Punkt unmittelbar außerhalb der Rotoroberfläche bis zu seiner äußeren Extremität abnimmt, um so dem äußeren Teil der Stäbe eine konische Form zu geben.

2. Vorrichtung nach Anspruch 1, **dadurch gekennzeichnet,** daß wenigstens die Hauptteile der betreffenden Stäbe aus Sintercarbid bestehen.

3. Vorrichtung nach Anspruch 1 oder 2, **dadurch gekennzeichnet,** daß die Stäbe in dem Rotor mit Hilfe einer im Inneren des Rotors angeordneten Einrichtung verankert sind.

4. Vorrichtung nach den Ansprüchen 1 bis 3, **dadurch gekennzeichnet,** daß die Stäbe diametral in verschiedenen Richtungen entlang dem Rotor verankert sind.

5. Vorrichtung nach den Ansprüchen 1 bis 4, **dadurch gekennzeichnet,** daß die Stäbe mit Hilfe eines Schraubgewindes, das an dem nach innen blickenden Ende der Stäbe vorgesehen ist, in dem Rotor verankert sind.

6. Vorrichtung nach Anspruch 2 und 5, **dadurch gekennzeichnet,** daß die Stäbe mit einem den Stab verankernden Einsatz ausgestattet sind, welcher aus einem geeigneten Material besteht und in einen Hohlraum in einem Ende des Stabes paßt und dort fest mit ihm verbunden ist.

## Revendications

1. Appareil pour broyer des produits minéraux et des matières dures similaires à l'aide d'un moyen de broyage agité par un rotor, dans lequel des tiges qui fonctionnent pour agiter ou remuer le moyen de broyage s'étendent tout droit à partir des surfaces du rotor, caractérisé en ce qu'au moins la partie externe des tiges qui s'étendent au-delà de la surface du rotor ont une section transversale généralement circulaire qui diminue continuellement à partir de la surface du rotor ou à partir d'un point immédiatement à l'extérieur de ladite surface du rotor jusqu'à son extrémité externe afin de donner à la partie externe des tiges une forme conique.

2. Appareil selon la revendication 1, caractérisé en ce qu'au moins la majeure partie des différentes tiges est constituée de carbure fritté.

3. Appareil selon la revendication 1 ou 2, caractérisé en ce que les tiges sont ancrées dans le rotor à l'aide de moyens situés à l'intérieur du rotor.

4. Appareil selon les revendications 1 - 3, caractérisé en ce que les tiges sont ancrées diamétralement dans différentes directions le long du rotor.

5. Appareil selon les revendications 1 - 4, caractérisé en ce que les tiges sont ancrées dans le rotor au moyen d'un filetage prévu sur l'extrémité des tiges faisant face à l'intérieur.

6. Appareil selon les revendications 2 et 5, caractérisé en ce que lesdites tiges sont pourvues d'une pièce rapportée d'ancrage de la tige qui est faite dans une matière appropriée et qui s'adapte dans une cavité à une extrémité de la tige et y est fixement connectée à cet endroit.
